Europäisches Patentamt

European Patent Office

Office européen des brevets

(11) Publication number: **0 336 548**
**A2**

## (12) EUROPEAN PATENT APPLICATION

(21) Application number: **89301836.6**

(22) Date of filing: **24.02.89**

(51) Int. Cl.⁴: **G06F 11/00**

(30) Priority: **08.04.88 US 179469**

(43) Date of publication of application:
**11.10.89 Bulletin 89/41**

(84) Designated Contracting States:
**BE CH DE ES FR GB IT LI NL SE**

(71) Applicant: **International Business Machines**
**Corporation**
**Old Orchard Road**
**Armonk, N.Y. 10504(US)**

(72) Inventor: **Camp, Laura Susan**
**3608 Cookstown**
**Austin Texas 78759(US)**
Inventor: **Elliott, Linda Carolyn**
**1602 Springer Lane**
**Austin Texas 78758(US)**
Inventor: **Lehman, Tobin Jon**
**175 Newell Avenue**
**Los Gatos California 95030(US)**
Inventor: **Lindsay, Bruce Gilbert**
**1185 Settle Avenue**
**San Jose California 95025(US)**

(74) Representative: **Hawkins, Anthony George**
**Frederick**
**IBM United Kingdom Limited Intellectual**
**Property Department Hursley Park**
**Winchester Hampshire SO21 2JN(GB)**

(54) Supporting long fields of recoverable database records in a computer system.

(57) A long field file, managed using log-based recovery mechanisms, contains values associated with large data set items and contains allocation information controlling long field file space. Each long field has a compact descriptor pointing to associated multi-page block(s) of data in the long field file. The descriptor is in the database record which logically contains the long field. Long field data is shadowed in the long field file during updates and changes to the descriptor and long field file allocation information are logged. During long field data value deletion or replacement, the allocation information for the corresponding space in the long field file is marked free and locked until the deleting transaction completes, thereby insuring that deletes are undoable. Support for storage, access and maintenance of long fields as logically integral components of recoverable database records is provided as well as row-level concurrency in minimization of long field data in the recovery log. Duplication in storing before and after images of long field data in the log is avoided. More efficient management of memory space freed by deletion of long field records is provided. Long field data is transferable directly without intermediate buffering including entire multi-page blocks of data and such transfer is effected with a single access to the storage device containing the data.

DATA FILE BEFORE: ⌐84

| LINDA C. ELLIOTT | 6959 | Lf₄ | . . . |
| --- | --- | --- | --- |

86

LONGFIELD FILE:

| Lf₁ | Lf₂ | Lf₃ | Lf₄ |
| --- | --- | --- | --- |

DATA FILE AFTER APPLYING UNDO: ⌐88

| LINDA C. ELLIOTT | 6959 | Lf₁ | . . . |
| --- | --- | --- | --- |

LOG FILE: ⌐90

| LINDA C. ELLIOTT | 6959 | Lf₁ | LINDA C. ELLIOTT | 6959 | Lf₄ | |
| --- | --- | --- | --- | --- | --- | --- |

92

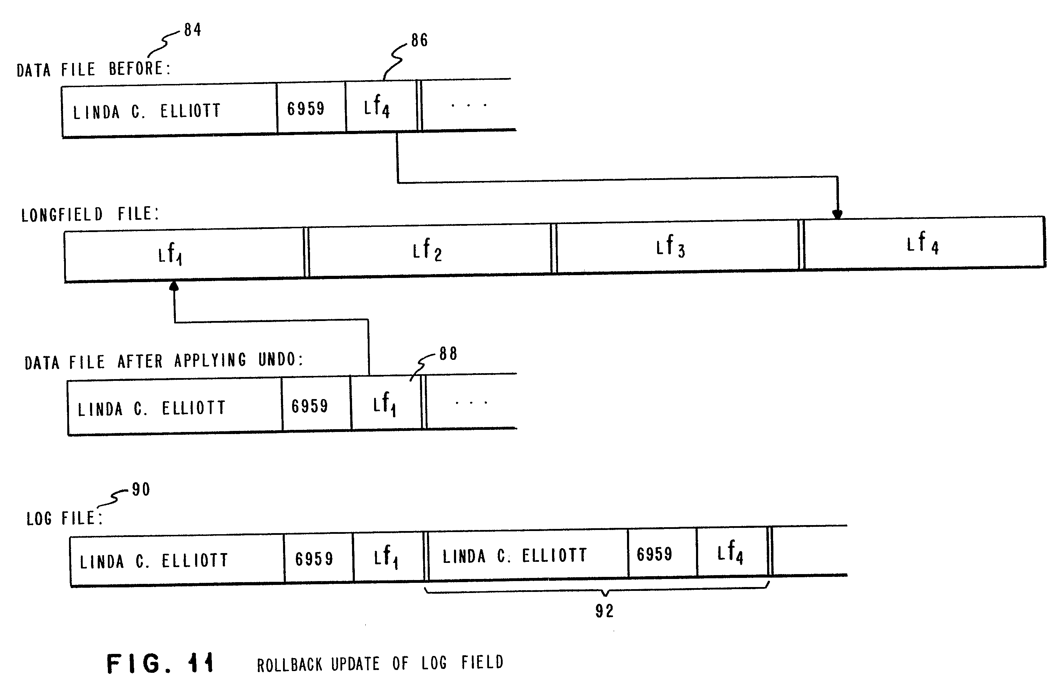

**FIG. 11**   ROLLBACK UPDATE OF LOG FIELD

# SUPPORTING LONG FIELDS OF RECOVERABLE DATABASE RECORDS IN A COMPUTER SYSTEM

This invention relates to information processing systems and, more particularly, relates to system and methods for supporting the storage, access, and maintenance of very long fields in recoverable data- base records.

Databases generally support the notion of storing and retrieving records. A record in a database system consists of a fixed set of items known as fields. Database fields may be of various types. Field or data types include fixed and variable length character types and numerics such as integers, floating point numbers, coded character or byte strings, etc. In most database systems the maximum length of character or byte type fields is severely constrained, usually to maximums on the order of 250 bytes. However, a need eventually arose in the information processing arts for relaxing this size constraint for character or byte type fields, allowing for fields up to several megabytes in size. This was for purposes of supporting storage of large data items such as images, voice and text, for example, in a database. In response to this need, long character or byte fields known as "long fields" were defined to store special data types of an unconstricted, lengthy nature, a specific example of which is known in the art as a long varchar which may be up to 32,700 bytes in length.

There are many important uses for such long character or byte fields in database records. Such fields can be used to store graphics and images, documents, or other long text strings, speech, or other audio or files. An advantage of maintaining such long fields as logical fields of database records is that information associated with the long field to describe, classify, or characterize the long field, can be carried in other fields of the database records containing one or more long fields. Such associations facilitate selecting and locating the specific records which contain the long fields of interest to an application.

Besides storing and retrieving data, database systems also supply facilities which aid in maintaining database integrity. In particular, the notion of a transaction as an atomic and logically isolated sequence of database accesses and updates allows database applications to access logically consistent data and to make multi-step changes to the database. These changes transform the database from one consistent- tent state to another without having to make provision in the application for concurrent use of the database by multiple applications and further without having to take into account the effects of system failures during the sequence of database actions comprising the transaction. Transaction atomicity insures that, despite system failures, either all of the effects of a transaction or none of the effects of a transaction will be present in the database following system restart recovery. Transaction isolation insures that concurrently executing applications which access and manipulate the database state logically behave as though they were executing alone. In particular, no application can view the update effects of incomplete transactions executed by other concurrent applications, and data accessed by an application during a single transaction reflects a single transaction-consistent database state.

One further aspect of transaction integrity facilities in database management systems is the ability of an application to abort or rollback the effect of its current transaction. Transaction abort or rollback removes or undoes any updates which occurred in the sequence of database actions which were issued by the application program as part of its current transaction. Conversely, an application may commit its current transaction which has the effect of making the database updates of the current transaction permanent and visible to transactions of other applications.

As the utility of long fields became apparent, the need grew in the information processing arts to not only support long fields in database records, but also to extend the benefits of the previously-noted transaction integrity to the values read from and written to those long fields. However, several problems existed in attempting to provide such support.

Perhaps most serious among these problems were constraints on the maximum size of a database record imposed by the database record storage methods, and the cost of traditional log based recovery methods to insure transaction integrity for long field values. Database systems often require that database records be smaller than the secondary to primary storage transfer unit (usually known as a page). While some systems allow database records to span pages, other systems avoid the inherent complexity of page-spanning records. Multi-page records also cause performance degradation due to the need to access multiple pages to access some of the fields of the record. Thus, it was highly desirable to permit long fields to be many times the size of the database page's size without requiring support for page-spanning database records.

Most database systems implement the transaction recovery facility by writing changes to database records to both the changed record and to a database recovery log. The information recorded in the database log allows changes to database records to be reversed, i.e. undone, in support of transaction rollback. The database log is also used to insure that the changes of committed transactions are incorporated into the database state during system restart following a system failure. Yet an additional difficulty with prior systems related to the problem of the management of space occupied by a long field when the field being deleted or updated and the transaction performing the delete or update must be rolled back. Because transaction rollback must reestablish the database state of the deleted or updated long field, the space needed to reestablish the state of the long field must not be consumed by other activity in the database before it is known that the space will not be needed to support transaction rollback.

Several approaches to supporting recoverable long fields or other long sequential byte strings have been suggested and even implemented. Database products commercially known as DB2 and SQL DS of the IBM Corporation, Armonk, New York, for example, have implemented long field support by storing the long field value in a sequence of blocks, each block being small enough to fit into a database page. Each of these blocks have the format of a database record and the blocks are linked into a linear list whose head is in the database record which logically contains the long field. Additionally, the values of the blocks of the long field are recovered using the standard database log techniques.

The disadvantages of this approach are:

1) the expense and log space consumed to record the large amount of data contained in the long field,

2) the limitations of the long field block size to the page size of the database system,

3) the necessity of traversing the list of blocks to access succeeding blocks or delete the long field, and

4) storing the long field block using the database record formats.

The disadvantage of having to write the large long field value to both the blocks of the field and to the database log is obvious. Limiting the size of long field blocks to the page size of the system reduces the amount of data which can be accessed with one access to secondary storage and increases the number of accesses need to retrieve the entire long field value. Maintaining the long field as a list of blocks means that access to the middle of the long field requires accessing all blocks preceding the desired block in order to determine the secondary storage location of the desired block. Storing the blocks of the long field using database record formats implies that record and page structure control information is maintained and stored with each block of the long field. This means that the pages containing the long field blocks must be retrieved and the bytes of the long field value be extracted and copied to the buffers of the application using an intermediate database buffer, thereby removing control information but precluding the direct transfer of the long field values. A technique was thereby highly desired whereby long field values could occupy entire pages or runs of sequential pages, whereby the pages would contain only value bytes of the long field and could be transferred directly from secondary storage to the application's primary storage buffers.

Much of the prior art relating to the foregoing is from the domain of transactional file systems. Liba Svobodova in "File Servers for Network Based Distributed Systems", ACM Computing Surveys, Vol. 16, No. 4 (December 1984, pages 353-399) provides a useful survey of several file systems which support transactions. The predominant approach for these systems is the use of shadow copies which is similar to the approach of the subject invention. Most of the systems rely upon specialized techniques to recover control and allocation information following a failure. The techniques XDFS and CFS, as described by J. Mitchell and J. Dion, in "A Comparison of Two Network-based File Servers", Communication of the ACM, Vol. 25, No. 4 (April 1982), pages 233-245, both use shadow pages but depend upon careful placement of control and allocation information to insure failure recovery. Both of the systems require extensive scanning of secondary storage to validate and reconstruct control information.

"A Client-Based Transaction System to Maintain Data Integrity", by W. Paxton, Proceedings of the Seventh Symposium on Operating Systems Principles, Asilomar, California (December 1979), pages 18-23, describes a shadow based file system which uses a form of careful replacement for control information known as intentions lists. Paxton's approach to storing long byte string values is similar to the subject invention in that it uses shadow page replacement as the basic recovery mechanism. However, the use of intentions lists as the mechanism for transaction commit requires at least three extra write operations to reliably update the control information associated with the long byte string value as contrasted with the subject invention which provides for only one extra log write of control information to recoverably update a long field.

Yet another system described in "The Alpine File System" by M. Brown, K. Holling, and E. Taft, in ACM Transactions on Computer Systems, Vol. 3, No. 4 (November 1985), pages 261-293 logs file content updates and copies file content from the log to the file following the commitment of the transaction modifying the file. This leads to three I/O operations per file page modified by the transaction. While file content changes in the Alpine system use a redo only log, file allocation operations are propagated immediately to secondary storage and use an undo log to support transaction abort. The disadvantages of the Alpine approach include the copying needed to propagate logged changes to the file proper and need for synchronous I/O to log and update file control information. This may be contrasted with the subject invention which writes log file content changes only to the long field file blocks and relies upon database recovery logging for control and allocation information recovery which implies that these changes do not need to be written synchronously and can be piggy-backed on other log I/O operations.

Additional prior art relating to long field management may be found in "Reimplementing the Cedar File System Using Logging and Group Commit", by R. Hagmann, Proceedings of the Eleventh Symposium on Operating Systems Principles, Austin, Texas (November 1987), pages 155-162. This work uses the shadow technique to recover file content pages and uses a log to recover changes to file control information. The logging and recovery granularity is the page and the log is a redo only log. The system described by Hagmann does not appear to support transaction roll- back. Allocation data is not logged and is recovered by scanning the extent tables of all files. Additionally, reservation of space for released pages is accomplished by postponing the allocation table updates until transaction commit. The present invention, however, provides sub-page record level logging and recovery and uses the log for recovery of both control information and allocation data.

Disclosed in "Method for Reserving Space Needed for Rollback Actions", IBM Technical Disclosure Bulletin, Vol. 29, No. 6, pp. 2743-2746, are methods employed to reserve the space released by a long field update or delete in case the long field update or delete must be undone pursuant to the rollback of the transaction which updated or deleted the long field. A method for reserving needed space was desired to avoid queuing for later processing the updates to the allocation data implied by the release of space previously occupied by the long field value.

Accordingly, from the foregoing it is apparent that systems and methods were desired for supporting long fields within database records which avoided necessity for spanning record support, multiple copying of long field values, necessity for intermediate buffering, and the like. Such systems and methods were further desired which provided for direct transfer of long field data and even such transfer of entire multiple blocks with a single access to secondary storage. Still further it was also desired that such systems and methods support sub-page level concurrency while minimizing the amount of data related to the long fields which must be placed in the recovery log.

According to the invention, there is provided a method of operating a computer system for transaction rollback of database records having long fields, comprising the steps of generating a data file comprised of said database records having a plurality of long field descriptors associated therewith generating a long field file comprised of said long field records having allocation page data associated therewith maintaining stored shadow copies corresponding to said long field records and updates to said long field records generating an undo log in functional response to changes to said database; and restoring said long field descriptors in corresponding ones of said database records and said allocation page data in response to said undo log.

An embodiment of the invention will now be described with reference to the accompanying drawings, in which:-

Fig. 1 is a conceptual illustration of a table of data for use with the present invention which includes long field file values in the form of representations of visual images;

Fig. 2 is an illustration of a logical representation of the data storage for the table of Fig. 1 showing the relationship between the data and long field files;

Fig. 3 is a more detailed illustration of the long field file of Fig. 2 depicting allocation of space within the file;

Fig. 4 is an illustration of an example of buddy space allocation;

Fig. 5 is an illustration of the trimming of a buddy segment of Fig. 4;

Fig. 6 is an illustration of the manner of locking deleted buddy segments of the long field files of Fig. 4;

Fig. 7 illustrates the structure of a long field descriptor in the data file depicted in Fig. 2 for a 64K long field also shown in Fig. 2;

Fig. 8 illustrates adding a new data record to the long field file and the resulting changes to the long field, data, and log files;

Fig. 9 illustrates deleting an existing data record from the long field file and resulting changes in the long field, data, and log files;

Fig. 10 illustrates the updating of a long field file and the changes to the data file and log file resulting therefrom;

Fig. 11 illustrates a rollback update of a long field file including changes to the long field, data and log files; and

Fig. 12 is a general block diagram of a computerized database system implementing the invention.

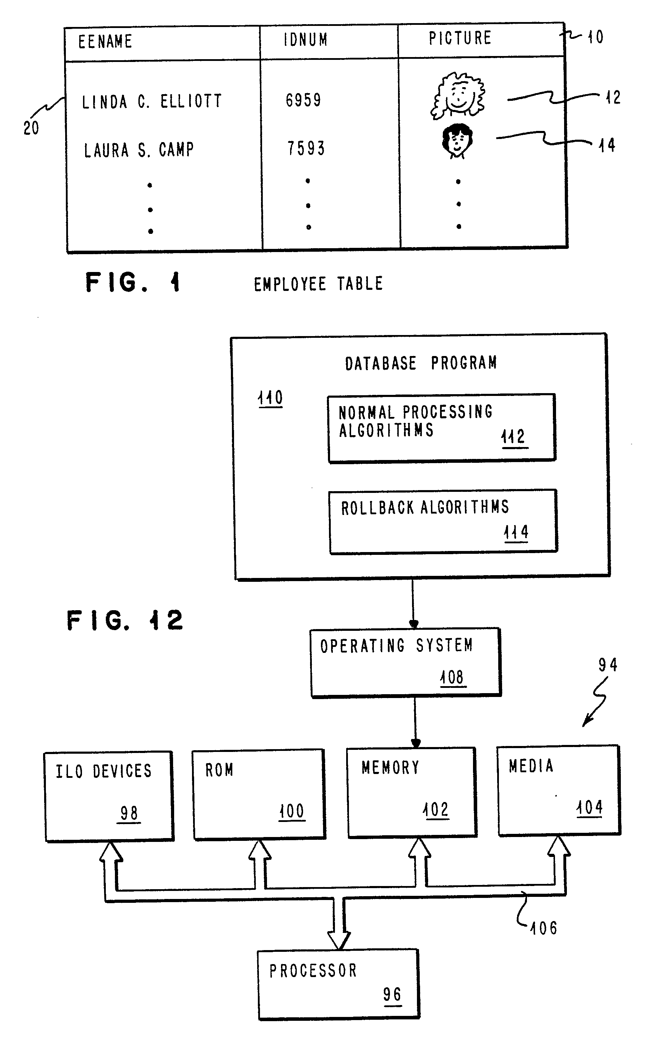

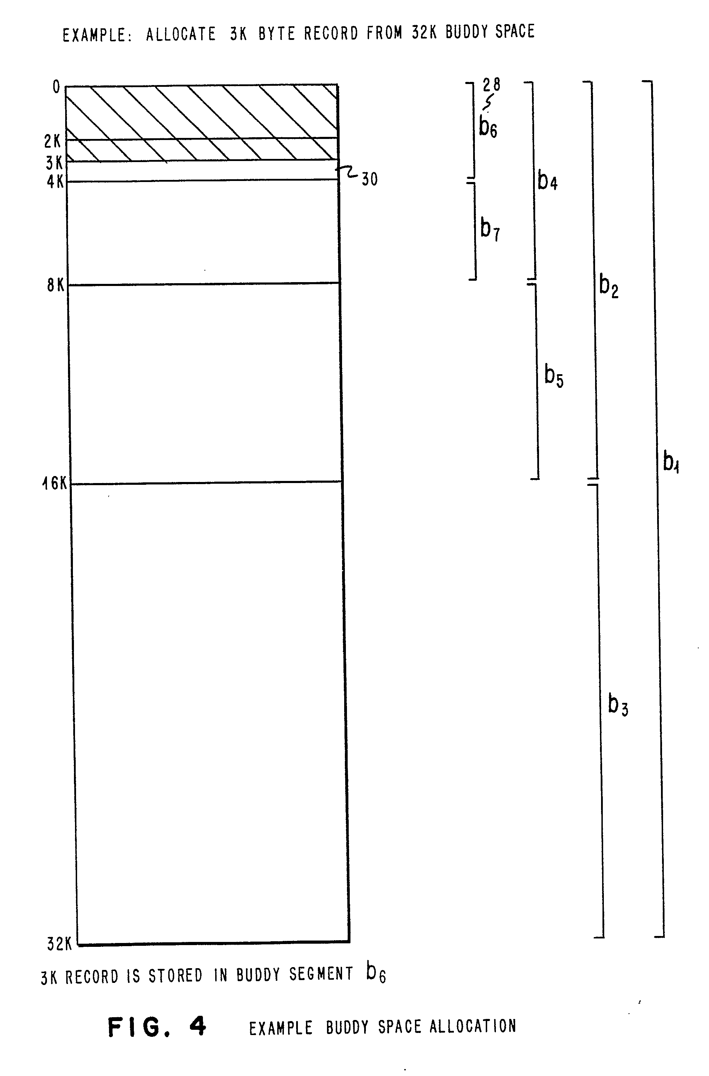

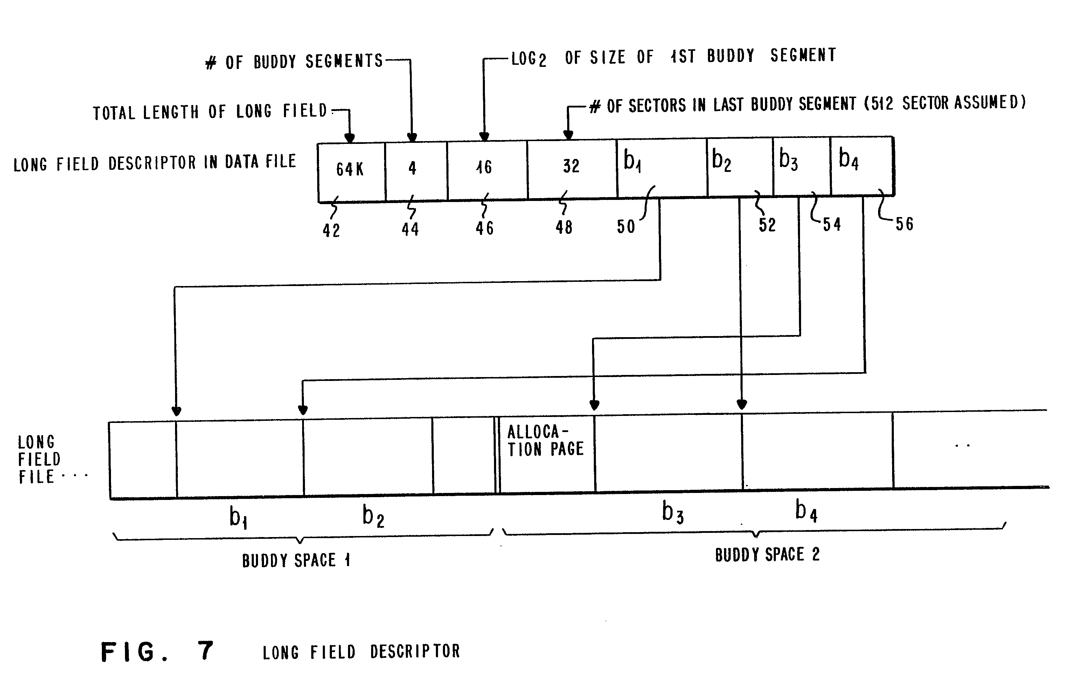

In order to gain an understanding of the invention, a general conceptual description will first be given with respect to Figs. 1-3 of a long field and the relationship in the present invention between a data file containing data records which contain long field descriptors and a long field file containing the actual long field data. This will be followed by a description of long field space management used in the present invention with respect to Figs. 4-6 and then a more detailed description of the actual format of the long field descriptor of the present invention with respect to Fig. 7.

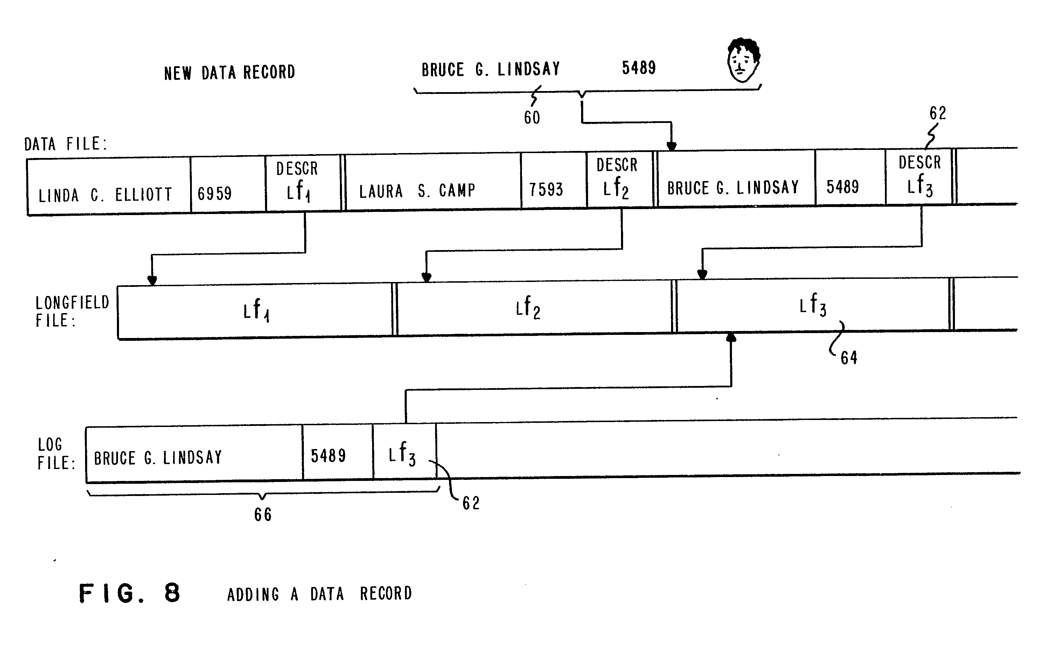

Finally, a more detailed description will be given of the operations of components of a database system in accordance with the present invention with respect to Figs. 8-12. More particularly, a description will be provided of algorithms in accordance with the teachings of the invention for accessing a long field as well as for other operations during normal processing with the database system, i.e. the creation, deletion, replacing, and updating of a long field, allocation and de-allocation of data blocks, and the adding, deleting, and updating of rows with respect to long fields, and finally a description of algorithms of the present invention for transaction rollback actions including rollback of an add, delete, or update row operation.

With reference to Fig. 1, a typical data table is shown therein containing data which may be input into a database system of the present invention of Fig. 12 and thence updated or accessed. A distinguishing characteristic of the type of data included in the table of Fig. 1 may be noted with reference to the picture column 10. This column is intended to indicate pictorially that entries such as 12 and 14 are of a particular type characterized by relatively large length of character or byte fields necessary to describe them. In the example, the items 12 and 14 would be the digitized data sets necessary to represent visual images shown there. However, it will be apparent that other types of data may be encountered which lend themselves to the techniques of the present invention equally well such as speech or other auditory information, long documents or other long text strings, and the like. All such items which might graphically appear functionally in the column 10 nevertheless would have a common characteristic in requiring relatively large numbers of bytes of data to characterize the particular item (ranging from perhaps a few thousand bytes to in excess of several megabytes).

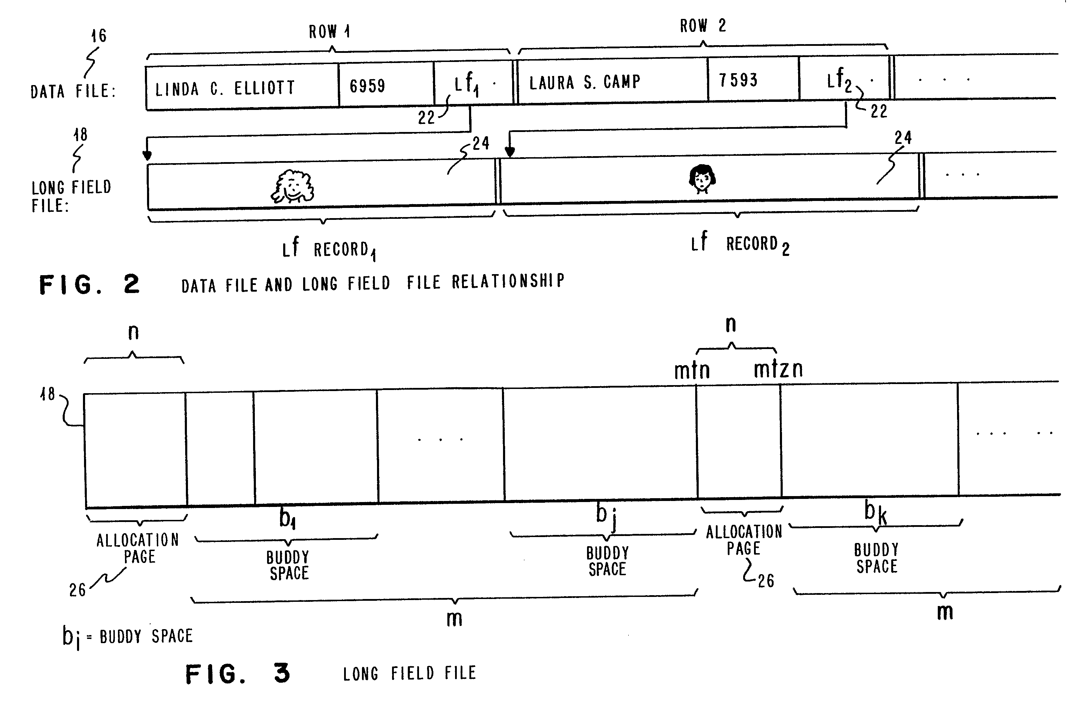

A database table such as that of Fig. 1 containing long field values for such items 12 or 14 will have two files associated therewith: a data record file 16 and a long field file 18, both of which are pictorially represented in Fig. 2. The data record file contains all the stored data for each row of the table except for the actual long field values for the items such as 12 or 14. The fields such as 20, Fig. 1, and a table row are physically stored in one record of the data record file 16. It is a feature of the invention that if there is a long field in the row, a long field descriptor 22 for each such row is stored in the data file 16 instead of the actual data. Each long field in the table such as that represented by reference numeral 12 is stored as one or more logical records 24 in the long field file 18. The long field descriptor 22 contains the unique record identifier of the corresponding long field 24. The descriptor 22 contains all the information needed to locate that particular corresponding long field 24 within its long field file 18. Thus, in summary, Fig. 1 shows a sample data table with a column 10 which is a long field type whereas Fig. 2 depicts a logical representation of the data storage for the table in the database management system of the present invention.

With reference to Fig. 3, it will be appreciated that an orderly technique is necessary for the efficient management of the space of the long field file inasmuch as the file will contain vast amounts of the actual hard data. Thus, with reference to Fig. 3 and accompanying Figs. 4-6 one such method for long field space management will be now discussed in greater detail. With respect to this technique, a general concept well known in the information processing art is employed referred to as buddy space allocation. More detailed information regarding this concept may be found in my aforementioned copending U.S. Patent Application Serial No. 07,059,666. Further reference to this technique may be found in "The Art of Computer Programming, Volume 1 Fundamental Algorithms", Donald E. Knuth, Second Edition, Addison Wesley, pages 442-451; "Communications of the ACM", Volume 8 (1965), pages 623-625, and Volume 9 (1966), pages 616-625, all of which are herein incorporated by reference.

The long field file 18 depicted in Fig. 3 contains one or more allocation pages 26 which are utilized to keep track of the parts of the file allocated to long field records and the parts which are free to receive data. Each allocation page is n bytes in length, where n is the system page size. Each allocation page describes the next m bytes of the file (where m is a multiple of n) which sequentially follow the corresponding allocation page. If the file grows large enough, another allocation page 26 at the $m+n$th byte of the file 18 will be provided as shown in Fig. 3.

Allocation and deallocation of space within the long field file uses the hereinbefore noted buddy space algorithm. Each m bytes of a file which is managed by an allocation page consists of a sequence of equal-sized buddy spaces. This is shown in Fig. 3 as buddy spaces bi. A buddy space is divided into storage units referred to hereinafter as buddy segments (such as that shown at reference numeral 28 as buddy segment b6 in Fig. 4). Initially, a buddy space consists of one large buddy segment such as b1. If the record to be allocated is less than or equal to half the size of the original buddy segment, the buddy segment is thence divided into two equal components. If one of these components is still over twice as big as the record, it is again divided in half. This process continues until an optimal-sized buddy segment is allocated.

After having described the general principle of the buddy space algorithm, operation thereof will now be detailed by an example with reference to Fig. 4. In Fig. 4 there is depicted an example of allocating a 3K record from a 32K buddy segment. Initially there is only one 32K buddy segment, b1. It is thence divided into two buddy segments, b2 and b3. Inasmuch as the segment b2 is still substantially larger than the 3K record, it is again divided in half yielding segments b4 and b5. Since b4 is still too large, it is again split into segments b6 and b7 which are each 4K in size. b6 is thus finally allocated to the 3K record.

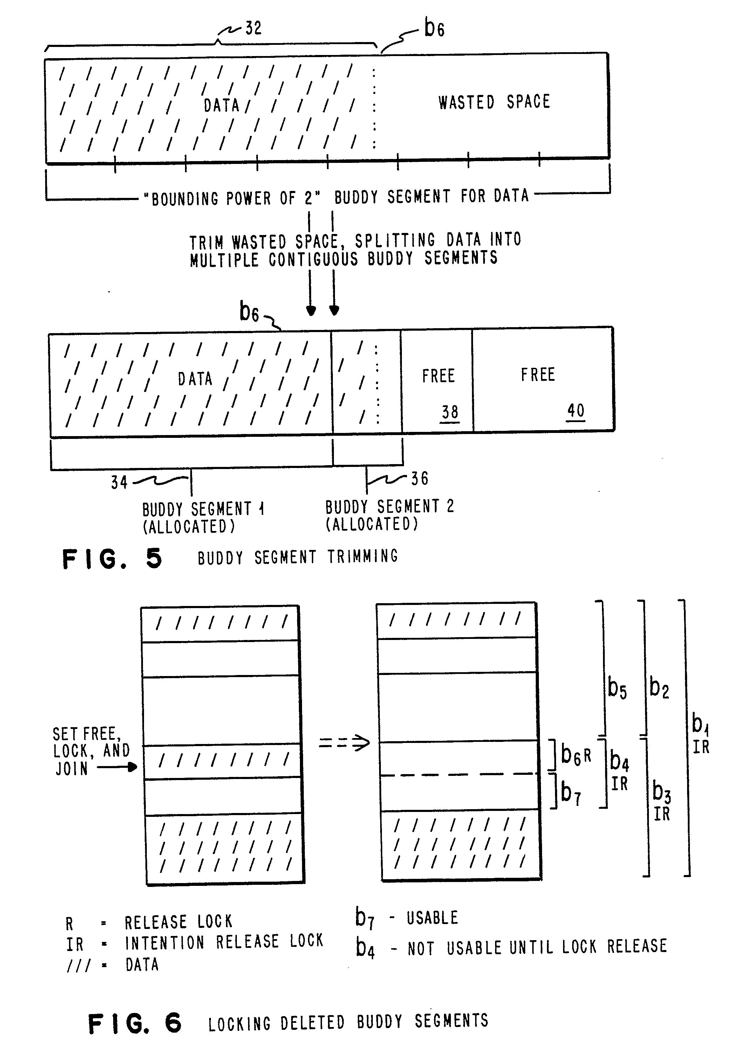

When a free buddy segment (i.e. available to receive data), such as the segment b6, 28, is at the hereinbefore described appropriate size to hold the record and thus allocated to the record, there is likely to be unused space at the end of the segment as shown in Fig. 4 at reference numeral 30. To eliminate the waste, the allocated buddy segment 28 is thence "trimmed". The contiguous memory at 32 in the buddy segment is broken into two contiguous buddy segments 34 and 36 or more leaving freed buddy segments 38 and 40, as graphically depicted in Fig. 5.

Because of the bulk nature of long fields, it may be impractical for all data intended to comprise a long field to be added at the same time. In this case, it is convenient to support an "append" function in a manner known in the art for long fields. Each portion of the long field is then accordingly allocated separately.

In the operation of a database system supporting long fields in the manner of the present invention, it will be apparent that it may become necessary to delete one or more long fields from time to time. When long field records become free due to deleted rows, the buddy of the segment allocated to a long field record is examined to determined if it is also free. If so, the two buddies are joined again. The location of a segment can easily be computed from the address and length of its buddy. In order to support transaction rollback using shadowing, the long field image cannot be removed or changed. Therefore, even if the long field segment is marked free in the allocation map, it cannot be allocated to another long field until after the transaction performing the delete commits. To reserve this free buddy segment for the remainder of the transaction, the buddy segment is locked with a long lock known in the art, i.e. a lock held until the end of the transaction. A locked buddy segment is still joined to its buddy if the buddy is free. Thus, a lock must also be placed on the larger "joined" buddy segment to indicate that a portion of it is not yet free. When the transaction commits, the locks are released and the buddy segment becomes free.

Two types of locks are used to reserve buddy segments which will be hereinafter described as well as their use with reference to the accompanying Fig. 6. A first such lock is referred to as a release or R lock which, in example of Fig. 6, may be placed on the segment b6. This is the lock obtained for the buddy segment being freed, the result of which is that no portion of that buddy segment may be used until the transaction commits.

The second type of lock used to reserve buddy segments is the intention release or IR lock such as those shown in Fig. 6 in the example. These locks are obtained for all ancestors of the buddy segment being freed. An ancestor is a larger buddy segment that will contain the buddy segment being freed after joining. When a buddy segment is allocated for a long field, no part of it is permitted to be locked with an R lock. An ancestor of the buddy segment to be allocated may be locked with an IR lock, but no R locks are permitted on the allocated portion.

With reference to Fig. 7, a more detailed description will now be provided of the precise organization of the long field descriptors of the present invention. A long field descriptor, it will be recalled, is used to identify and locate the data block sequences which make up a long field. Such descriptors consist of several parts. First, the total length of the long field in bytes is provided at 42. Next, the number of buddy segments used to store the long field is provided at reference numeral 44. There is one buddy segment for each portion of the long field. Each of these buddy segments, except the last one, is presumed to be the same length. The size in number of buddy sectors (minimum-sized allocation units) of all but the last buddy segment of the long field is then given at reference numeral 46. In the preferred embodiment this size is actually provided as a log to the base 2 of the actual size. Next, at 48, the number of buddy sectors (minimum-sized allocation units) in the last buddy segment is provided. The final portion of long field descriptors is then comprised of an array of offsets 50, 52, 54, and 56. Each entry of the array contains the offset of a corresponding buddy segment from the beginning of the corresponding long field file. It is a feature of the invention that the use of the actual address of each portion of the long field in the descriptor permits the respective long field to be read directly in one I/O operation without the necessity for examining its corresponding allocation page previously described. The long field descriptor depicted in Fig. 7 is for a 64K long field consisting of four 16K portions.

It should be well understood that any well behaved progression of buddy segment sizes can be encoded in a long field descriptor without explicitly denoting the size of each segment. The particular encoding described uses a constant sized sequence of non-terminal buddy segments with explicit specification of the terminal buddy segment size. Alternative encoding might use a progression in increasing sized buddy segments with each segment being twice the size of it predecessor until the agreed upon maximum buddy segment size is reached. Subsequent segments would be the maximum size and the size of the terminal segment could be specified or deduced from the total length specified at 42. While encoding with well behaved progressions of buddy segment sizes eliminate the need to store the size of each buddy segment in the long field descriptor, and therefore minimize the size of the long field descriptor, the invention does not exclude the use of encoding which explicitly designate the size of each buddy segment.

Several algorithms are used in accordance with the invention when table rows containing long fields are updated during normal forward processing or during rollback processing. First, the algorithms associated with normal processing will be provided and discussed followed by those for rollback processing, such algorithms being provided in the form of pseudo code whereby they may be readily implemented in the form of computerized routines in a well known manner for use in the system of Fig. 12.

## Normal Processing

The following algorithms describe how reads and updates during normal forward processing are accomplished when data rows contain long fields. It will be recalled that all logging described below follows the write-ahead logging protocol whereby updates to long field allocation pages are logged. This means that the data pages or long field allocation pages on which changes occur are fixed in a buffer cache until the log record representing the changes has been written to permanent media such as disk. Before the changes are unfixed, a log sequence number (LSN) of the log record is written to the page header.

The following algorithms describe the processing performed in response to requests received at the database interface which lead to manipulation of long fields. The request at the database interface correspond to: (1) accessing a long field (logically) contained in a database record, (2) adding a record containing one or more long fields, (3) deleting a record containing one or more long fields, and (4) updating or replacing the value of one or more long fields contained in a record. The algorithms describing the processing of database interface requests make use of algorithms for processing individual long fields. The algorithms describing long field processing are: (5) creating a long field, (6) deleting a long field, and (7) partially updating a long field. The long field processing algorithms, in turn, make use of algorithms for (8) allocating and (9) freeing buddy segments in the long field file.

## 1. ACCESSING A LONG FIELD

Applications may retrieve the value contents of a long field which is part of a database record. The long field value is copied to buffers supplied by the application. To access a long field, the record containing the descriptor for the long field is accessed and the blocks of the long field referenced by the descriptor are copied from the long field file to the user buffer. Each multi page block of the long field, except for the last page of the last block, can be transferred directly from the file to the application buffer (i.e. user's area) with a single access to the long field file. The algorithm for accessing a long field is:

Fix the data record page containing the record which contains the long field into the database buffer pool and seize shared access to the page;

Lock (shared) the database record containing the long field descriptor for the duration of the transaction;

Access the long field descriptor in the database record;

For each block of sequential data pages comprising the long field, except for the last such block, access the portion of the long field file referenced by the descriptor and copy it to the application buffer;

For the last block of the long field, access the long field file and copy all except for the last page of that block to the application buffer;

Allocate a single page buffer and copy the last page of the long field value into the buffer. Then copy the last bytes, as determined by the long field length in the long field descriptor, from the single page buffer to the application buffer and free the single page buffer; and
Release shared access to the data record page and unfix it from the buffer pool

## 2. ADDING A RECORD CONTAINING LONG FIELDS

Applications may add database records containing long fields. Each long field is created and stored into the long field file using algorithm 5 and the resulting long field descriptors are incorporated into the record which is then added to the data file.
For each long field of the added record:
- Create the long field and its descriptor using algorithm 5 below;
- Incorporate the long field descriptor constructed by algorithm 5 into the appropriate field of the added record;
Locate a data file page containing sufficient space for the added record containing long field descriptors;
Fix the data file page in the database buffer pool and synchronize exclusive access to the data file page;
Add the record containing long field descriptors to the data file page in the database buffer pool;
Lock the added record exclusively;
Log the value of the added record, including the long field descriptors and copy the LSN of the log record to the data file page header in the database buffer pool; and
Release synchronization on the data file page and unfix it from the database buffer pool.

## 3. DELETING A RECORD CONTAINING LONG FIELDS

Applications may delete database records containing long fields. The record to be deleted is accessed in the database buffer pool and the long field descriptors of the record are accesses and used by algorithm 6 to conditionally release the long field file space occupied by the long field values. Subsequently, the record to be deleted is removed from its data file page as follows:
Lock the deleted record exclusively;
Fix the data file page containing the record to be deleted in the database buffer pool and synchronize exclusive access to the data file page;
For each long field contained in the record to be deleted, access the long field descriptor in the record and perform algorithm 6 to release the space occupied by the long field in the long field file;
Log the value of the record being deleted, including the long field descriptors and copy the LSN of the log record to the data file page header in the database buffer pool;
Remove the record from the data file page;
Release synchronization on the data file page and unfix it from the database buffer pool.

## 4. UPDATING OR REPLACING LONG FIELD VALUES

Applications may partially or completely update the value of long fields contained in database records. The record whose long fields are being updated is accessed in the database buffer pool and the long field descriptors for the long fields being manipulated are accessed. If the value of a long field is being completely replaced, algorithms 5 and 6 are used to conditionally release the long field file space containing the old value, store the new long field value into the long field field, and construct a new long field descriptor. If the value of the long field is being partially updated, algorithm 7 is used to modify the long field file and construct a modified long field descriptor. In either case, the new long field descriptors replace the old long field descriptors in the database record as follows:
Lock the record to be updated exclusively;
Fix the data file page containing the record containing long fields to be updated in the database buffer pool and synchronize exclusive access to the data file page;
For each long field contained in the record which is to be fully replaced, employ algorithm 6 to conditionally release the long field file space occupied by the old value of the long field and then employ algorithm 5 allocate new space in the long field file, to store the new long field value, and construct a new long field descriptor;
For each long field contained in the record which is to be partially replaced, employ algorithm 8 to update the long field value and construct a modified long field descriptor;
Log the old and new values of the modified long field descriptors (along with old and new values of any other modified fields) and copy the LSN of the log record to the data file page header in the database buffer pool;
For each modified long field, replace its long field descriptor in the record with the new or modified long field descriptor; and
Release synchronization on the data file page and unfix it from the database buffer pool.

## 5. CREATING A LONG FIELD

This algorithm creates a long field consisting of several buddy segments residing in the long field file pointed to by a long field descriptor. Creating of a long field occurs when a database record containing a long field is inserted into the database (or when a previously null long field is updated). To create a long field, acquire a sequence of multipage blocks in the long field file copy the value of the long field to the allocated space, and create a long field descriptor that points to the newly acquired data blocks we execute the following steps:

According to the designed progression of long field buddy segment sizes, allocate enough buddy segments in the long field field to contain the long field value using algorithm 8;

Copy the long field data to the buddy segments just allocated (Long field writes transfer data from user space directly to stable storage in the long field file. Once the transfer has finished, the data is permanently stored); and

Construct a long field descriptor whose components reference the buddy segments of the long field and return the new long field descriptor.

## 6. DELETING A LONG FIELD

This algorithm conditionally frees the buddy segments referenced by a long field descriptor. its data blocks. Care must be taken to not allow the space occupied by the long field value to be reused before the transaction deleting the long field is completed. To ensure that the space is not reused, the allocation data describing the space used by the long field buddy segments is locked until the end of the transaction. The algorithm for deleting a long field is:

For each block of sequential data pages (buddy segment) referenced by the long field descriptor:

Deallocate data block in accordance with algorithm 9.

## 7. PARTIALLY UPDATING A LONG FIELD

This algorithm replaces N bytes of the long field with a different N bytes. Determine which blocks (buddy segments) of the long field value are to be overwritten and allocate new blocks of identical sizes to hold the new data. Copy any data from the old data blocks that will not be overwritten to the same logical positions on the new blocks. Write the new data to the proper positions in the new blocks. Update the long field descriptor to point to the new blocks. Release the old blocks. The algorithm for updating a long field is:

For each block of sequential data pages (buddy segment) containing bytes to be overwritten, conditionally deallocate the buddy segment in accordance with algorithm 9;

Allocate buddy segment(s) identical in size to the released buddy segments using algorithm 8;

Copy unmodified bytes from the old long field buddy segments to the new buddy segments;

Copy the changed bytes of the long field to the new buddy segments; and

Construct a long field descriptor whose components reference the existing buddy segments for segments without any changed bytes and reference the newly allocated segments for segments with changed bytes.

## 8. ALLOCATE BUDDY SEGMENT

This algorithm allocates one buddy space of a specified number of pages in the long field file. Whenever space is needed for a long field, the allocation pages of the long field file are searched (in share mode) until an unallocated and unlocked buddy segment of the specified size is found. The (suggested) number of pages in a buddy segment are powers of 2 up to some maximum (possible 1024 pages). An allocation page of the long field file may indicate that a buddy segment is free but the segment is locked by some transaction which has freed the segment and not yet committed. Such buddy segments cannot be allocated. The algorithm to allocate a buddy segment is:

Search allocation pages of the long field field to find a buddy segment of the desired size which is free. A buddy segment is free if the allocation page indicates that it is free AND the allocation data for the segment is not locked by any transaction which has freed space but not committed;

Free buddy spaces may be split to obtain a space of the proper size if they are not locked;

Each allocation page is fixed into the database buffer and synchronized for shared access before searching on the page;

It a sufficient number of adjacent unlocked and free pages cannot be located, the long field file must be extended:-

- Extend the long field file by N pages (1 allocation page & N-1 long field data pages).

- Fix the new allocation page in the database buffer pool

- Initialize new allocation page indicating that all buddy segments "covered" by the page are free

- Write a log record indicating the addition of the allocation page and associated data blocks (This is a redo action only and not undoable.)

- Write LSN of log record in the allocation page header;

Having located a suitable free and unlocked buddy segment fix the allocation page containing the suitable and unlocked buddy segment and synchronize exclusive access to the allocation page;
Mark sequence of data pages of the buddy segment allocated in the allocation page;
Log changes to allocation page information;
Write LSN of log record in allocation page header; and
Release synchronization mechanism on allocation information and unfix allocation page from the database buffer pool.

## 9. DEALLOCATE BUDDY SEGMENT

This algorithm marks a buddy segment in the long field file free. The allocation page is updated to mark the buddy segment as free and lock the segment allocation data until the transaction completes. The algorithm for deallocating a buddy segment is:
Fix allocation page containing the allocation status of the buddy segment to be deallocated in the database buffer pool;
Synchronize exclusive access to allocation page;
Mark buddy segment as free and (possibly) combine the freed segment with adjacent segments to form a larger free segment;
Lock (X mode) the buddy segment and any segments created by combining free segments. This prevents any transaction from reusing this space until the current transaction completes;
Log changes to allocation information;
Write LSN of log record in allocation page header;
Release synchronization mechanism on allocation information; and
Unfix allocation page;

## Rollback Actions

During transaction rollback, the log records, i.e. the changes made to the long field allocation pages and data record file pages by a transaction, are "undone" in the opposite order of forward processing, that is to say they are processed in reverse order to that in which they were written. Long field descriptors for the old values of the long field are replaced in the data record file. Since the buddy segments which contain the "deleted" long field images have been prevented from reallocation with locks, the old long field descriptors correctly identify the old long field images. The changes in the long field allocation pages are undone to reflect the state of the long field before the transaction began. The changes made during rollback are logged. These log records are well known in the art as compensation log records or CLRs. Such CLRs are thus written during undo operations in the event that recovery itself must be restarted due to system failure. Such compensation logging also follows the write-ahead protocol.

The following algorithms describe in pseudo code actions which occur in accordance with the subject invention during rollback - both rollback which is directly initiated by the user and rollback which occurs during system recovery. The rollback algorithms are described in terms of the actions taken to 1) "undo" the changes involving data records described by data record add, delete, and update log records, and to 2) "undo" the changes involving changes to long field file allocation pages described by free and allocate log records.

## 1. UNDO DATA RECORD CHANGE

To undo a data record add, delete, or update, the data record file page containing the added, deleted, or updated record is accessed and values from the log record are used to restore the record to its state prior to the change recorded by the log record.
- Using the information in the log record, fix the data record page containing the record into the database buffer pool and seize exclusive access to the page;
- Update the the data record page using the "old" values from the log record. An added record is removed from the data record page. A deleted record is added to the data record page. An updated record is updated on the data record page. Any long field descriptor fields created, removed, or updated are modified in the same way as other fields using the "old" values from the log record;
- Log a compensation log record with (at least) the values placed into the data record on the data record page;
- Write LSN of log record in data record page header; and
- Release exclusive access to the data record page and unfix it from the buffer pool.

## 2. UNDO LONG FIELD ALLOCATION OR RELEASE

The long field file allocation page is accessed and modified according to the specification of the log record. If the log record was for freeing of a buddy segment, the indicated buddy segment must re-allocated. The indicated buddy segment must still be free due to the locks set when the log record was created. If the log record was for allocating a buddy segment, the indicated buddy segment must be freed;

- Using the information in the log record, fix the allocation page of the long field file into the database buffer pool and seize exclusive access to the page;
- Update the allocation information using the information in the log record to indicate that buddy segments are free or allocated as indicated in the log record. If the log record was written when freeing a buddy segment, mark the indicated segment as allocated;
- If the log record was written when allocating a buddy segment, mark the indicated segment as free;
- Log a compensation log record (at least) indicating the changes made to the allocation page of the long field file;
- Write LSN of log record in allocation page header; and
- Release exclusive access to the allocation page and unfix it from the buffer pool.

Fig. 8 depicts graphically what is occurring in accordance with the invention in adding a data record to a long field such as the new record data 60. It will be seen that this data 60 appears in the data file with the exception of the actual data for the image itself. In that case, consistent with the invention, a new descriptor 62 is provided which points to the actual image data which is stored at 64 in the long field file. In accordance with write-ahead logging protocol, a record of this change is reflected at 66. It is important to note that rather than copying the image data to the log file, only the descriptor 62 for the third long field is included in the log file indicating the location of the image data 64 in the actual long field file.

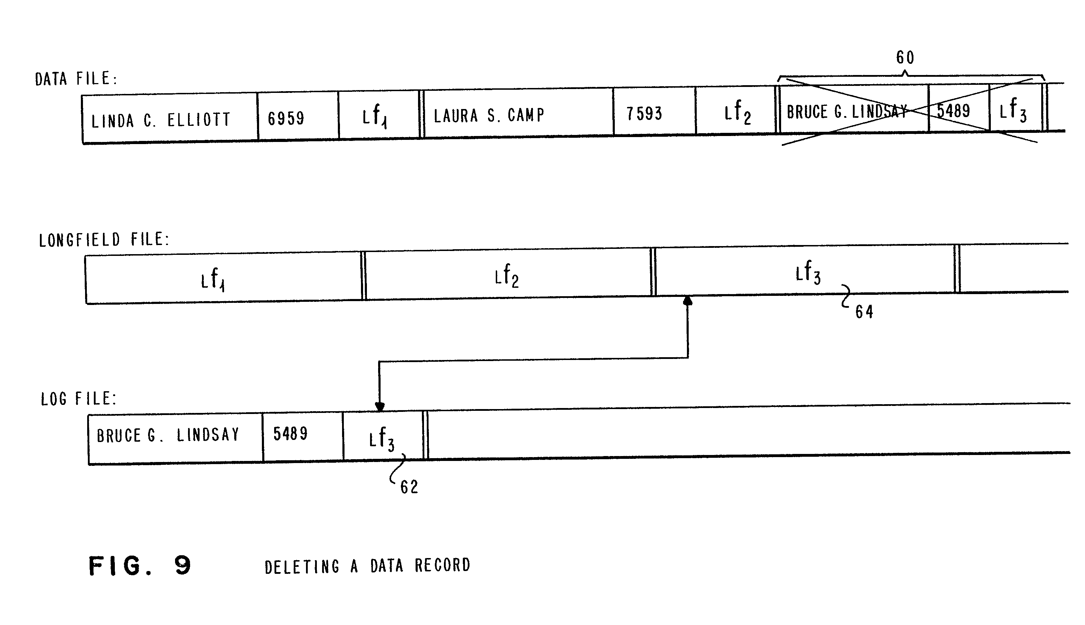

Fig. 9, in like manner, provides a graphical indication of what transpires in accordance with the present invention when deleting of a data record relating to a long field occurs. A previous new record data 60 which was added to the data file in Fig. 8 will be deleted from the data file as shown in Fig. 9. A log record of this action will occur in the log file however, again, only the descriptor 62 pointing to the actual long field image data 64 in the long field file. is contained in the log file.

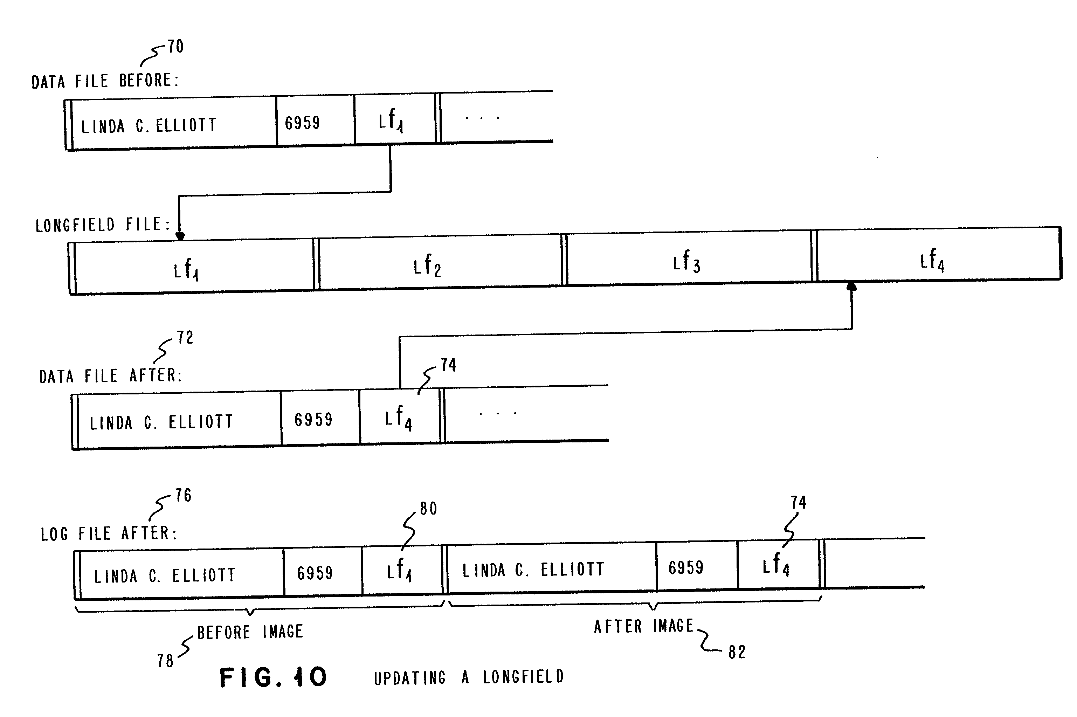

Fig. 10, in like manner, indicates graphically what transpires for an updating of a long field. At 70 the data file is depicted prior to the updating. However, after the updating, as shown in the data file 72. a new descriptor 74 is provided (LF4) pointing to a corresponding location of the new image data in the long field file. As shown by the log file 76 after such updating, the before image record data 78 is included with the previous descriptor 80, as well as the after image record data 82 including the new descriptor 74 pointing to the correlative long field file LF4.

Finally, with respect to Fig. 11, there is graphically depicted therein the transformation of the data file due to a rollback update of a long field. At 84 the data file is depicted before the rollback update wherein the descriptor 86 (LF4) points to the actual image data in the LF4 location of the long field file. At 88 the data file is shown after applying the undo whereby the descriptor 86 (LF4) reverts back to the original descriptor 88 (LF1), i.e. the data file reverts to the form shown at 70 in Fig. 10 prior to the update whereby after applying such undo, the descriptor 88 of the data file (LF1) now points to the appropriate prior image data at LF1 in the long field file. Finally, it will be noted that the log file 90 includes an indication at 92 of this changed record data. However, again in accordance with the logging technique of the present invention wherein the entire image data is not copied to the log file 90, only the LF1 and LF4 descriptors appear therein with the image data only appearing in the long field file.

With reference to Fig. 12, a block diagram of processing apparatus which may be used to run computer programs providing the function of the previously described algorithms thereby implementing the system of the present invention is shown. The system preferably takes the form of a typical personal computer architecture such as that embodied in the IBM Personal System/2. With respect to this system 94, a micro-processor 96 is provided such as an Intel 80286 or 80386 device which is interconnected to a desired selection of I/O devices 98, ROM 100, memory 102, and media 104 by means of a bus 106. It will be appreciated that in a conventional manner, the bus 106 will be comprised of address, command, and data lines for purposes well known in the art. The I/O devices 98 which may be included in the system 94 of the present invention may include a display such as an IBM Personal System Colour Display 8510, a keyboard, mouse or the like for user input, and a printer if desired. It will also be appreciated that for purposes of simplicity adapters have been omitted from Fig. 12 although it will be appreciated that such adapters for the various devices 98-104 may either be included as part of the IBM Personal System/2 are available as plug in options from the IBM Corporation.

Within the read only memory or ROM 100, the basic input/output operating system or BIOS is stored for execution by the processor 96. The BIOS, as is well known, controls the fundamental operations of the computer system 94. Additionally, an operating system 108 is provided such as OS/2 which will be loaded into memory 102 and will run in conjunction with the BIOS in ROM 100.

Additional information on the Personal System/2 and Operating System OS/2 which may used in a preferred embodiment to implement the system and methods of the present invention may be found in the following reference manuals herein incorporated by reference: IBM Operating System/2 Version 1.0 Standard Edition Technical Reference, IBM Corporation Part No. 6280201, Order No. 5871-AA, Technical Reference Manual, Personal System/2 (Model 80), IBM Corporation, Part No. 68X2256, Order No. S68X-2256; and OS/2 Programmer's Guide, Iacobucci, Ed, McGraw Hill 1988.

In accordance with the invention, an application program 110 is further provided which may be loaded into memory 102 or stored in media 104. This media 104 may be of any conventional form such as a hard file, diskettes associated with a disk drive, or the like. In accordance with OS/2, the data base application program 110 may be considered as an operating system 108 extension and will be include numerous functions conventionally associated with a database program providing instructions to the processor 96 so as to enable the system 94 to perform relational database functions as hereinbefore described. The operator may interface with the database program through the various I/O devices 98, such interfacing including entering, accessing, changing, or deleting data from the database and other such tasks. For example, the user may interact with the database program 110 by inputting some form of data manipulation language command such as an SQL command well known in the art via the keyboard, whereupon the system 94 will query the data resident in the database and output the desired answer set for inspection by the user on a video terminal, printer, or the like.

It will be noted that software functions included in the database program 110 include normal processing functions 112 and rollback functions 114. These functions, graphically and conceptually represented in Fig. 12 as part of the database program 110, will be recognized as performing the hereinbefore described algorithms 1-10 and 1-4 relative to forward processing and rollback, respectively.

One additional feature of the system and methods of the present invention is to provide for support of very large long fields without consuming excessive descriptor space. By adjusting the size of the sequential page allocations on secondary storage which hold the value contents of the long field, the amount of long field value data referenced per component of the long field descriptor can be controlled. Both variable and fixed size allocation units can be used to vary, as desired, the relationship between descriptor size and long field size. More particularly, by including information in the long field descriptor to specify the sizes of the page sequences allocated to contain the value contents of the long field, the wasted space on secondary storage can be limited to the size of the smallest allocation unit (page) of secondary storage.

## Claims

1. A method of operating a computer system for transaction rollback of database records having long fields, comprising the steps of:
generating a data file comprised of said database records having a plurality of long field descriptors associated therewith;
generating a long field file comprised of said long field records having allocation page data associated therewith;
maintaining stored shadow copies corresponding to said long field records and updates to said long field records;
generating an undo log in functional response to changes to said database; and
restoring said long field descriptors in corresponding ones of said database records and said allocation page data in response to said undo log.

2. A method according to claim 1 wherein changes to said long field descriptors are written to said log.

3. A method according to claim 1 or claim 2 wherein said long field records include long field values.

4. A method according to any one of the previous claims including the further step of:
isolating transactions concurrently accessing said long fields.

5. A method according to claim 4 wherein said steps of isolating transactions comprises locking selected ones of said database records containing said descriptors for said long fields.

6. A method according to any one of the previous claims including the further step of:
reserving long field file space occupied by one of said shadow copies until a transaction associated therewith is completed or rolled back.

7. A method according to claim 6 wherein said step of reserving file space comprises placing a lock on said file space.

8. A method according to any one of the previous claims including the further step of:
accessing one of said allocation pages of said long field file by a plurality of concurrent transactions.

9. A method according to any one of the previous claims wherein said log manages recovery of concurrent updates by different transactions to one database page.

10. A method of operating a computer system for storing, maintaining, and accessing database fields stored from database pages, comprising the

23          EP 0 336 548 A2          24

steps of:

generating long field data values;

storing said data values in separate blocks of memory in at least one first file;

generating a plurality of long field descriptors each associated with a different one of said blocks and identifying where said each descriptor is located in said memory; and

storing said long field descriptors in at least one second file.

11. A method according to claim 10 wherein said database fields exceed the size of said database pages.

12. A method according to claim 10 or 11 wherein said at least one first file is at least one long field file; and said at least one second file is at least one data file.

13. A method according to any one of claims 10 to claim 12 wherein each of said long field descriptors contains all information necessary to locate said associated blocks of long field data in said long field file.

14. A method according to claim 13 further including the step of:

scanning said data file for said long field descriptors.

15. A computer system for use in storing, maintaining, and accessing database fields stored from database pages, comprising means for generating long field data values; means for storing said data values in separate blocks of memory in at least one first file; means for generating a plurality of long field descriptors each associated with a different one of said blocks and identifying where said each descriptor is located in said memory and means for storing said long field descriptors in at least one second file.

16. A system according to claim 15 wherein each of said long field descriptors contains all information necessary to locate said associated block of long field data.

13

| EENAME | IDNUM | PICTURE |
|--------|-------|---------|
| LINDA C. ELLIOTT | 6959 | |
| LAURA S. CAMP | 7593 | |
| ⋮ | ⋮ | ⋮ |

**FIG. 1**    EMPLOYEE TABLE

DATABASE PROGRAM

110

NORMAL PROCESSING ALGORITHMS    112

ROLLBACK ALGORITHMS    114

**FIG. 12**

OPERATING SYSTEM
108

94

| ILO DEVICES 98 | ROM 100 | MEMORY 102 | MEDIA 104 |

106

PROCESSOR
96

EP 0 336 548 A2

**FIG. 2**   DATA FILE AND LONG FIELD FILE RELATIONSHIP

$b_i$ = BUDDY SPACE

**FIG. 3**   LONG FIELD FILE

EXAMPLE: ALLOCATE 3K BYTE RECORD FROM 32K BUDDY SPACE

3K RECORD IS STORED IN BUDDY SEGMENT $b_6$

# FIG. 4   EXAMPLE BUDDY SPACE ALLOCATION

FIG. 5   BUDDY SEGMENT TRIMMING

R  =  RELEASE LOCK
IR =  INTENTION RELEASE LOCK
/// =  DATA

$b_7$ - USABLE
$b_4$ - NOT USABLE UNTIL LOCK RELEASE

FIG. 6   LOCKING DELETED BUDDY SEGMENTS

# OF BUDDY SEGMENTS ── ──LOG$_2$ OF SIZE OF 1ST BUDDY SEGMENT

TOTAL LENGTH OF LONG FIELD── ──# OF SECTORS IN LAST BUDDY SEGMENT (512 SECTOR ASSUMED)

LONG FIELD DESCRIPTOR IN DATA FILE

| 64K | 4 | 16 | 32 | $b_1$ | $b_2$ | $b_3$ | $b_4$ |

42  44  46  48  50  52  54  56

LONG FIELD FILE · · ·

| | | | | ALLOCA-TION PAGE | | | | · · |

$b_1$   $b_2$                $b_3$   $b_4$

BUDDY SPACE 1                BUDDY SPACE 2

## FIG. 7   LONG FIELD DESCRIPTOR

EP 0 336 548 A2

NEW DATA RECORD                    BRUCE G. LINDSAY          5489

DATA FILE:

| LINDA C. ELLIOTT | 6959 | DESCR $Lf_1$ | LAURA S. CAMP | 7593 | DESCR $Lf_2$ | BRUCE G. LINDSAY | 5489 | DESCR $Lf_3$ |

LONGFIELD FILE:

| $Lf_1$ | $Lf_2$ | $Lf_3$ |

LOG FILE:

| BRUCE G. LINDSAY | 5489 | $Lf_3$ |

FIG. 8    ADDING A DATA RECORD

EP 0 336 548 A2

DATA FILE:

| LINDA C. ELLIOTT | 6959 | $Lf_1$ | LAURA S. CAMP | 7593 | $Lf_2$ | BRUCE G. LINDSAY | 5489 | $Lf_3$ |

60

LONGFIELD FILE:

| $Lf_1$ | $Lf_2$ | $Lf_3$ |

64

LOG FILE:

| BRUCE G. LINDSAY | 5489 | $Lf_3$ |

62

**FIG. 9**     DELETING A DATA RECORD

EP 0 336 548 A2

DATA FILE BEFORE: $\overset{70}{\diagup}$

| LINDA C. ELLIOTT | 6959 | $Lf_1$ | . . . |

LONGFIELD FILE:

| $Lf_1$ | $Lf_2$ | $Lf_3$ | $Lf_4$ |

DATA FILE AFTER: $\overset{72}{\diagup}$

| LINDA C. ELLIOTT | 6959 | $Lf_4$ $\overset{74}{\diagup}$ | . . . |

LOG FILE AFTER: $\overset{76}{\diagup}$

| LINDA C. ELLIOTT | 6959 | $Lf_1$ $\overset{80}{\diagup}$ | LINDA C. ELLIOTT | 6959 | $Lf_4$ $\overset{74}{\diagup}$ |

BEFORE IMAGE
78

AFTER IMAGE
82

**FIG. 10**    UPDATING A LONGFIELD

EP 0 336 548 A2

DATA FILE BEFORE: ~84

| LINDA C. ELLIOTT | 6959 | Lf₄ 86 | . . . |

LONGFIELD FILE:

| Lf₁ | Lf₂ | Lf₃ | Lf₄ |

DATA FILE AFTER APPLYING UNDO:

| LINDA C. ELLIOTT | 6959 | Lf₁ 88 | . . . |

LOG FILE: ~90

| LINDA C. ELLIOTT | 6959 | Lf₁ | LINDA C. ELLIOTT | 6959 | Lf₄ | |

92

FIG. 11    ROLLBACK UPDATE OF LOG FIELD

EP 0 336 548 A2